# EUROPEAN PATENT SPECIFICATION

(11) **EP 3 116 077 B1**
(45) Date of publication and mention of the grant of the patent: **31.10.2018**
(21) Application number: 15175623.6
(22) Date of filing: 07.07.2015
(51) Int. Cl.: H02B 1/30, H02B 1/38, H02B 1/044

(54) **ACCESSORY KIT FOR RETROFITTING INTERVENTIONS IN A LV OR MV SWITCHGEAR**
ZUBEHÖRKIT ZUR NACHRÜSTUNG VON EINGRIFFEN IN NIEDERSPANNUNGS- ODER MITTELSPANNUNGS-SCHALTANLAGE
KIT D'ACCESSOIRES POUR INTERVENTIONS DE RÉTROFITTAGE DANS UN APPAREILLAGE DE COMMUTATION MV OU LV

(43) Date of publication of application: 11.01.2017
(73) Proprietor: ABB Schweiz AG, 5400 Baden (CH)
(72) Inventor: Magoni, Giorgio, 24030 Brembate di Sopra (BG) (IT); Gatti, Callisto, I-24020 Albino (BG) (IT); Egman, Marco, I-24036 Ponte San Pietro (BG) (IT); Deck, Bernhard, D-79809 Weilheim (DE)
(74) Representative: De Bortoli, Eros

(56) References cited:
- EP-A1- 0 780 940
- EP-A2- 2 190 087
- US-A1- 2010 118 471

## Description

The present invention regards an accessory kit that is particularly useful for retrofitting interventions in a low or medium voltage switchgear.

More particularly, the present invention regards an accessory kit for retrofitting a low or medium voltage switchgear with an electronic device.

Within the framework of the present invention the term "low voltage" relates to voltages lower than 1 kV AC and 1.5 kV DC while the term "medium voltage" relates to voltages higher than 1 kV AC and 1.5 kV DC up to some tens of kV, for example up to 72 kV AC and 100 kV DC.

As is known, in LV or MV switchgears, electronic devices configured to provide supervision, control, protection, communication and/or monitoring functionalities are widely adopted.

Such electronic devices, which are often defined as "IEDs" (Intelligent Electronic Devices), may comprise, for example, relays, protection units, sensor units or the like.

Typically, IEDs are arranged in a LV cabinet of the LV or MV switchgear and are normally mounted on a cabinet door of this latter.

As is known, during their operating life, LV or MV switchgears are often subject to retrofitting interventions in which new components or devices are mounted on already existing installations.

Such retrofitting interventions often comprise the new installation of an IED on the switchgear or the replacing of an existing relay (of analog or digital type) of the switchgear with a new IED.

The experience has shown how these retrofitting interventions may be quite time-consuming as they often require to design dedicated installation arrangements for mounting the new IED on an already existing cabinet door and/or modify or replace the structure of the cabinet door itself to allow the installation of the new IED.

Therefore, these interventions may have a relevant impact on the overall maintenance and operation costs of the switchgear.

These drawbacks are even more critical when it is needed to install an IED having a relatively complex structure on an already existing cabinet door, e.g. an IED provided with a main unit and an external unit (e.g. a HMI - Human Machine Interface), which are separated and electrically connected one to another.

EP2190087A2 discloses a known type of accessory kit for retrofitting interventions, which includes the features of the preamble of the following claim 1.

The main aim of the present invention is to provide an accessory kit for retrofitting a LV or MV switchgear with an electronic device (e.g. a new IED), which allows overcoming the above-mentioned problems.

Within this aim, it is an object of the present invention to provide an accessory kit, which provides high levels of installation flexibility in mounting an electronic device on a LV cabinet door of a LV or MV switchgear.

Another object of the present invention is to provide an accessory kit, which has a relatively simple structure with a relatively low size.

Another object of the present invention is to provide an accessory kit, which can be industrially manufactured at competitive costs.

In order to achieve the above aim and objects, the present invention provides an accessory kit for retrofitting a LV or MV switchgear with an electronic device, according to the following claim 1 and related dependent claims.

A further aspect of the invention relates to a LV or MV switchgear, according to the following claims 15 or 16.

Further characteristics and advantages of the invention will emerge from the description of preferred, but not exclusive, embodiments of the electric pole unit, according to the invention, non-limiting examples of which are provided in the attached drawings, wherein:

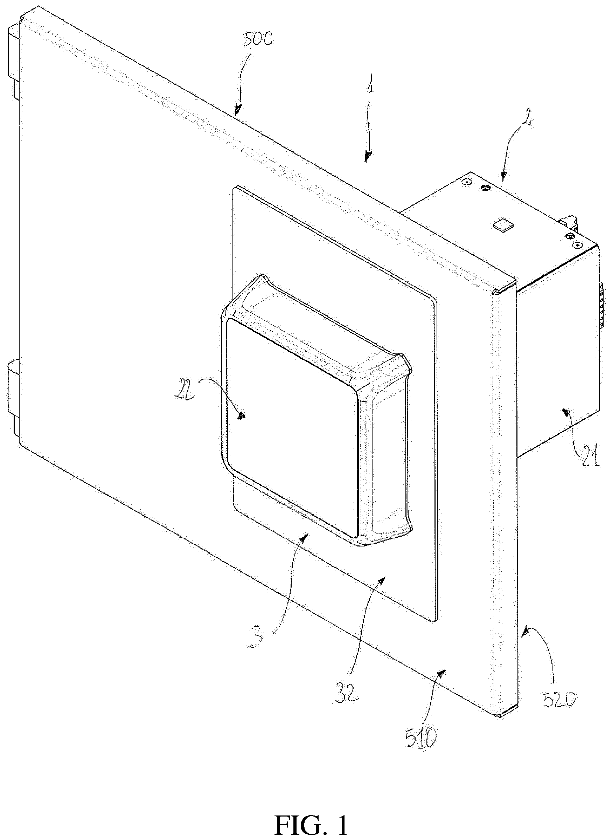

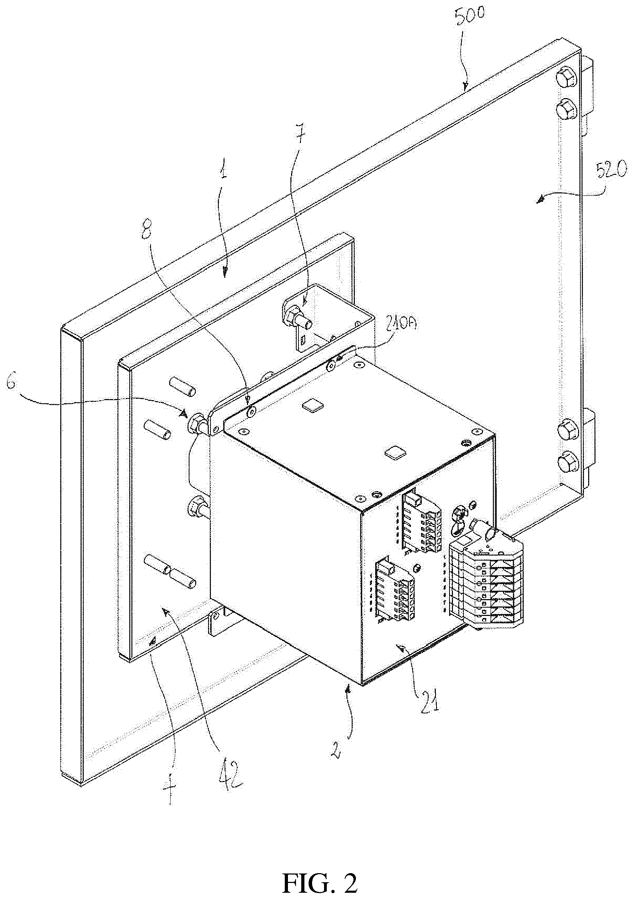

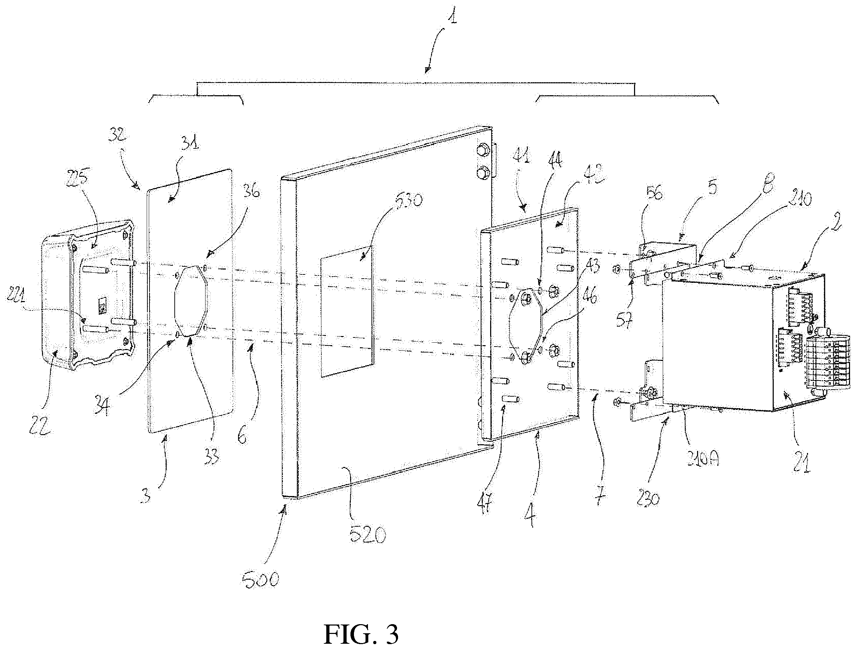

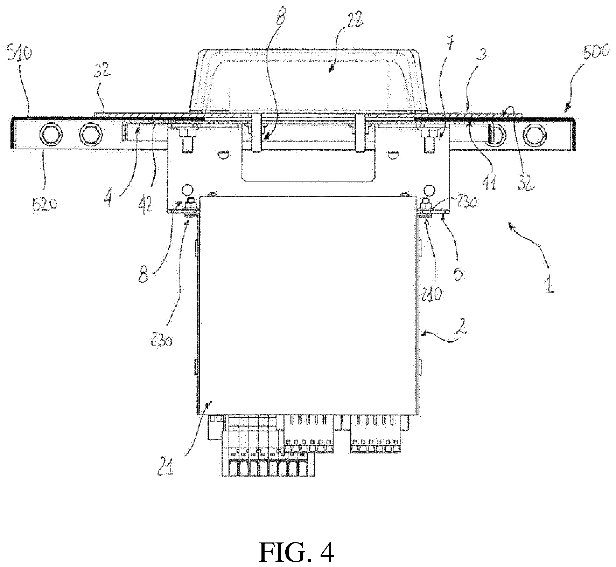

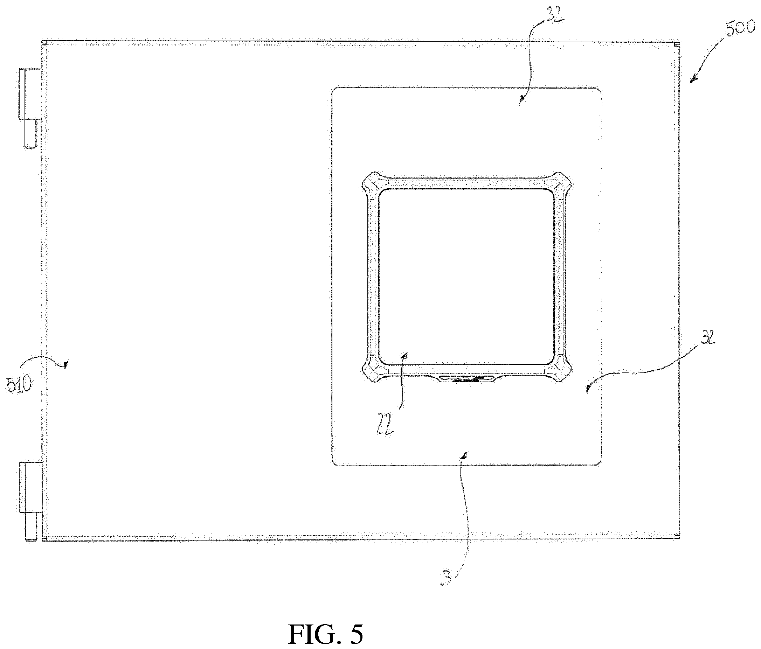

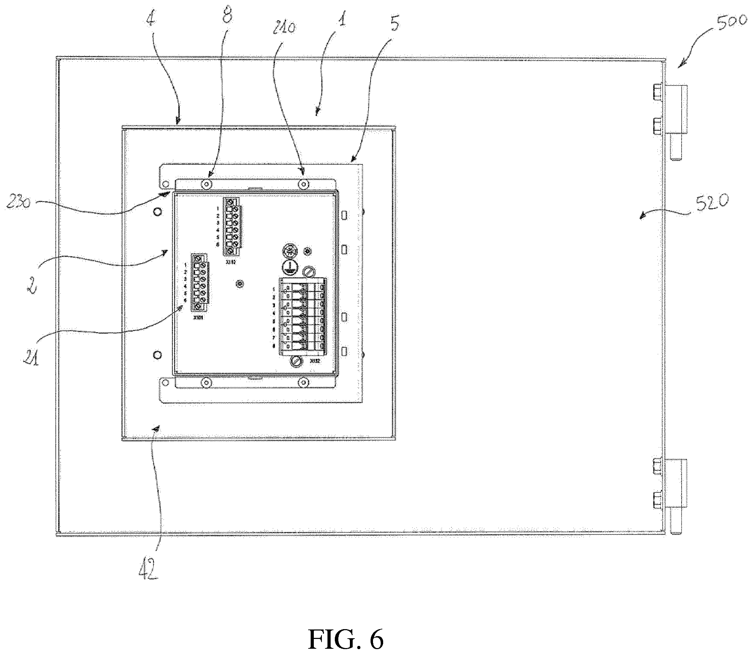

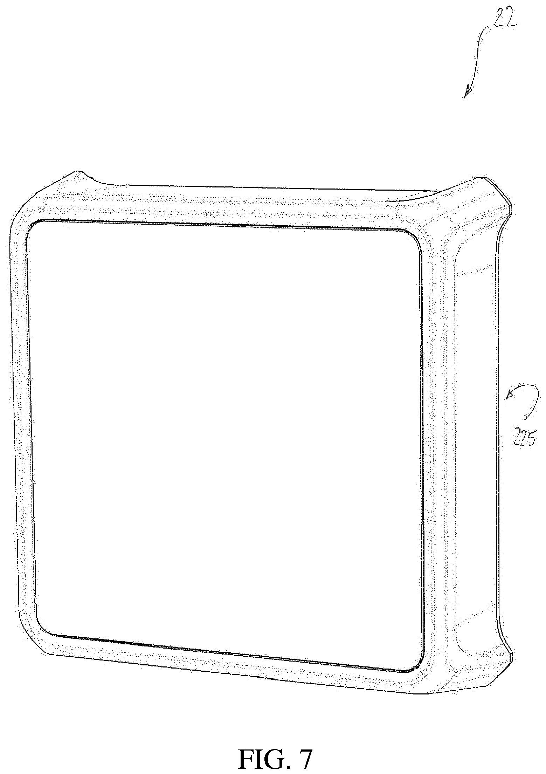

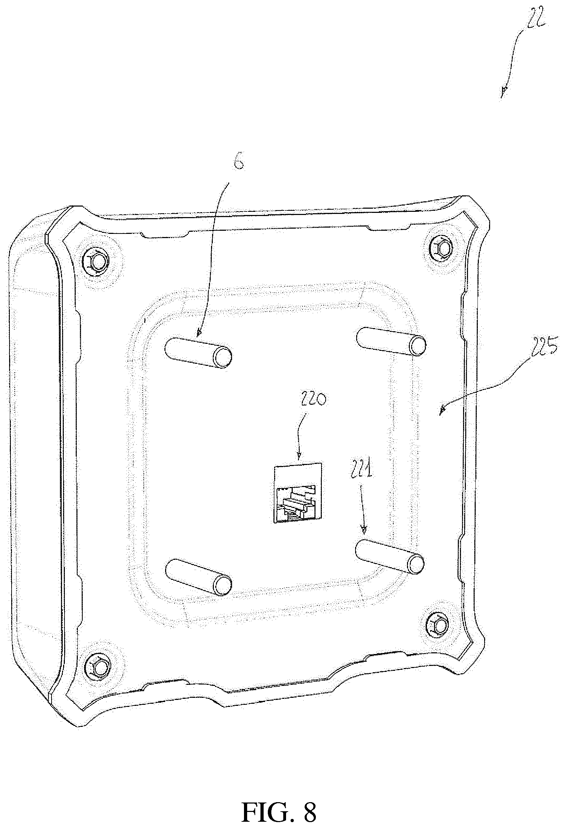

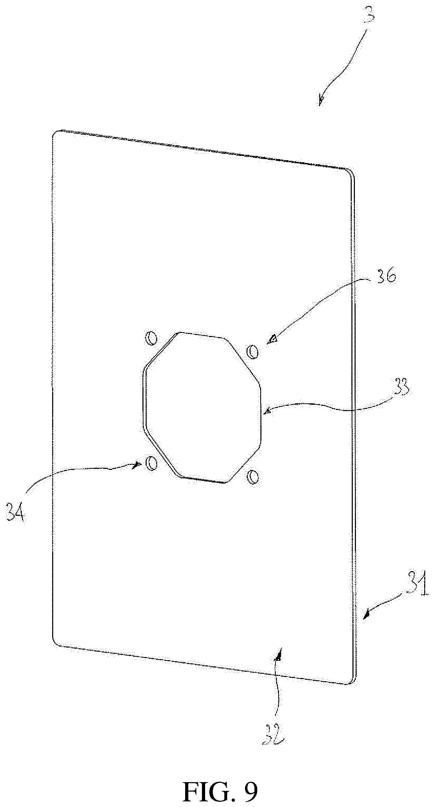

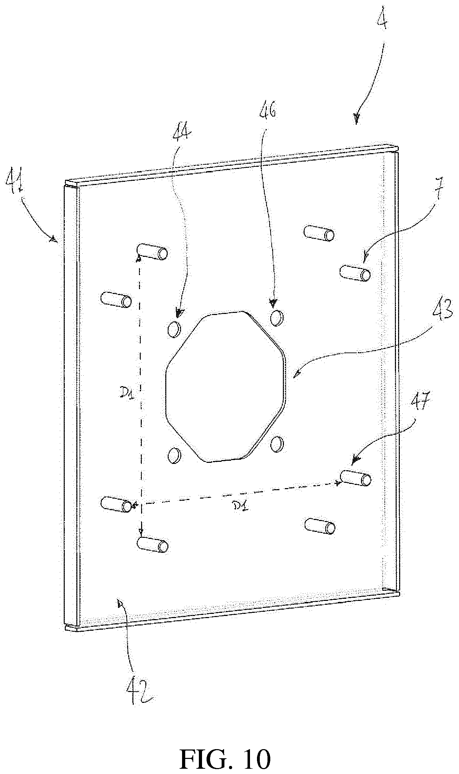

- Figures 1-11 show schematic overall or partial views of the accessory kit, according to the invention, in an embodiment;
- Figure 12-13 show schematic views of variant embodiments of a component of the accessory kit, according to the invention;

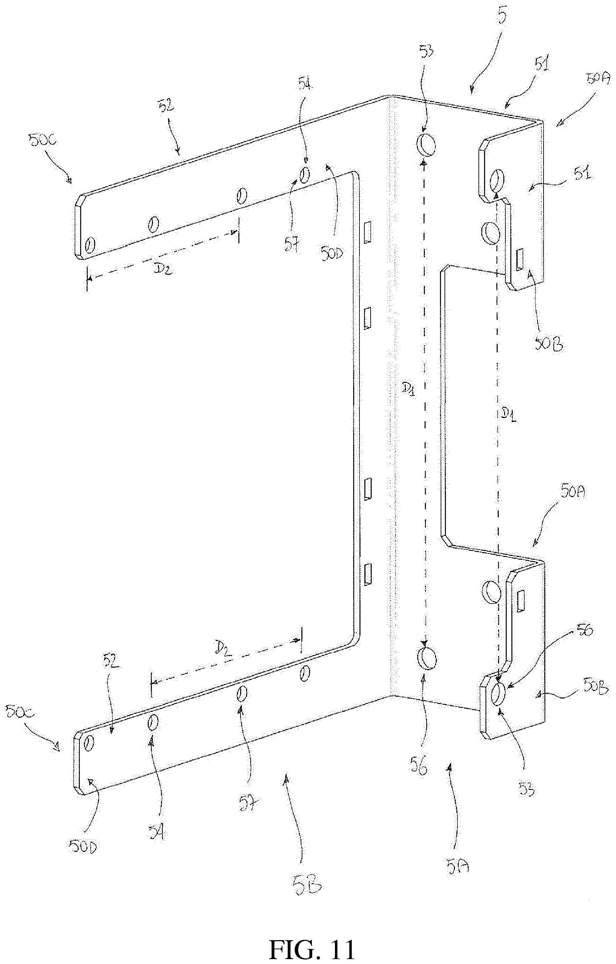

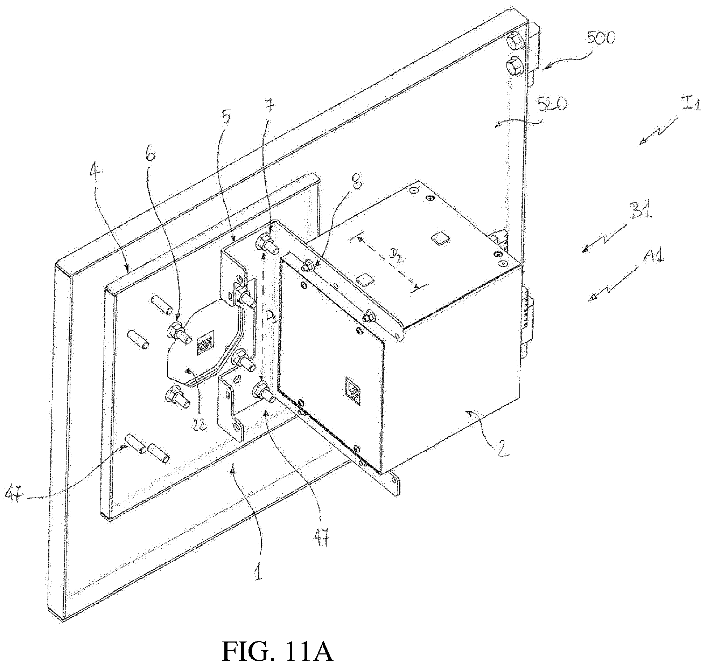

- Figures 11A-11G, 12A, 13A show schematic views of possible installation positions of an electronic device on the cabinet door of a LV or MV switchgear by means of the accessory kit, according to the invention.

With reference to the mentioned figures, the present invention relates to an accessory kit 1 for retrofitting a LV or MV switchgear (not shown) with a new electronic device 2.

The accessory kit 1 is adapted to position the electronic device 2 in a LV cabinet (not shown) of a LV or MV switchgear.

More particularly, the accessory kit 1 is adapted to install the electronic device 2 on a cabinet door 500 of said LV cabinet.

The cabinet door 500 may be of known type and it comprises an external surface 510 and an internal surface 520, which are faced towards the outside and the internal volume of the LV cabinet, respectively.

The electronic device 2 may be of any type suitable for use in LV or MV switchgears, for example a relay, a protection unit, a sensor unit or the like.

The electronic device 2 may have a one-piece structure, thereby comprising a sole main unit 21 to be installed within the LV cabinet.

Alternatively, the electronic device 2 may comprise a main unit 21 and an external unit 22, which is separated from and electrically connectable with the main unit 21 and which is to be installed externally to the LV cabinet.

The external unit 22 may be, for example, a HMI unit that has to be manually accessed by an operator.

In the embodiments shown in the cited figures, the electronic device 2 is shown as provided with the external unit 22. This choice has illustrative purposes only and is not intended as limiting the scope of the invention in any way.

When the electronic device 2 comprises also an external unit 22, the cabinet door 500 may comprise a port 530 to allow the passage of wires for electrically connecting the main unit 21 and the external unit 22.

The accessory kit 1 comprises a first clamping element 3, which is adapted to be coupled with the cabinet door 500 at the external surface 510 thereof.

Preferably, the first clamping element 3 comprises a first coupling surface 31, at which it is mechanically coupleable with the external surface 510 of the cabinet door 500.

Preferably, when the electronic device 2 comprises an external unit 22, as shown in the cited figures, the first clamping element 3 is adapted to mechanically couple with said external unit in order to fix this latter at the external surface 510 of the cabinet door 500.

In this case, the first clamping element 3 comprises a second coupling surface 32, at which it is mechanically coupleable with a corresponding coupling surface 225 of the external unit 22, at one or more mechanical connection points 221 of this latter.

The accessory kit 1 comprises a second clamping element 4, which is adapted to be coupled with the cabinet door 500 at the internal surface 520 thereof.

Preferably, the second clamping element 4 comprises a third coupling surface 41, at which it is mechanically coupleable with the internal surface 520 of the cabinet door 500.

The accessory device 1 comprises first fixing elements 6 to fix the first and second clamping elements 3, 4 to the cabinet door 500.

Preferably, when the electronic device 2 comprises an external unit 22, the first fixing elements 6 are adapted to fix the external unit 22 with the first clamping element 3 at the external surface 501 of the cabinet door 500.

The first clamping element 3 comprises first mechanical connection points 36, at which it is mechanically coupleable with the first fixing elements 6.

Preferably, when the electronic device 2 comprises an external unit 22, the first fixing elements 6 are solidly connected with the external unit 22 at the mechanical connection points 221 and are mechanically coupleable with the first clamping element 3 at the first mechanical connection points 36 of this latter.

However, other solutions are possible. For example, in some embodiments of the invention, the first fixing elements 6 may be removable with respect to both the first clamping element 3 and the external unit 22 of the electronic device 2.

The second clamping element 4 comprises second mechanical connection points 46, at which it is mechanically coupleable with the first fixing elements 6.

Preferably, the first fixing elements 6 are removable with respect to second clamping element 4.

However, other solutions are possible. For example, in some embodiments of the invention, the first fixing elements 6 may be solidly connected with the second clamping plate 4 at the third coupling surface 41 of this latter and may be removable with respect to the first clamping element 3 and the external unit 22 of the electronic device 2.

The accessory device 1 comprises at least a support element 5 mechanically coupleable with the second clamping element 4 and with the main unit 21 of the electronic device 2.

The accessory device 1 preferably comprises a single support element 5.

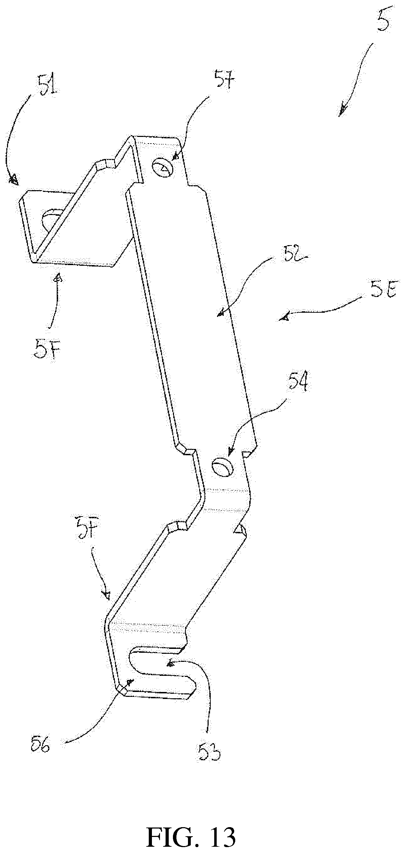

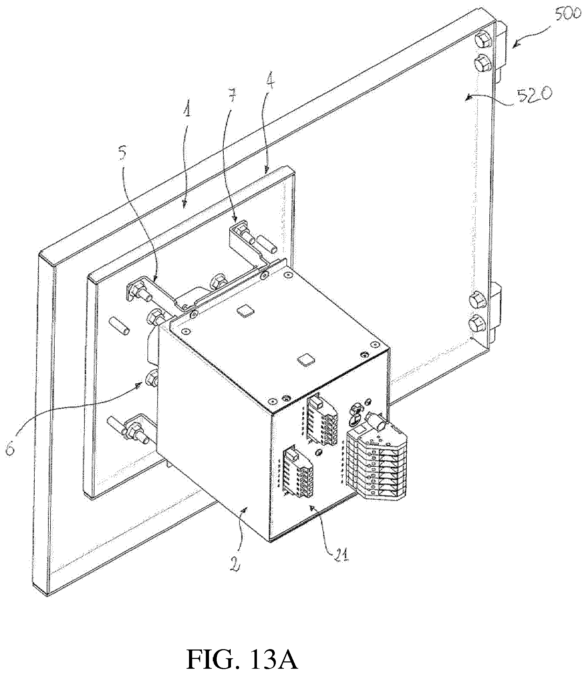

However, according to some embodiments of the invention (figures 13-13A), the accessory device 1 may comprise a plurality of support elements 5.

Preferably, each support element 5 comprises one or more fifth coupling surfaces 51, at each of which it is mechanically coupleable with a fourth coupling surface 42 of the second clamping element 4, and one or more sixth coupling surfaces 52, at each of which it is mechanically coupleable a corresponding coupling surface 230 of the main unit 21 of the electronic device 2.

The accessory device 1 comprises second fixing elements 6 to fix each support element 5 to the second clamping element 4.

The second clamping element 4 comprises third mechanical connection points 47, at which it is mechanically coupleable with the second fixing elements 7.

Each support element 5 comprises fourth mechanical connection points 56, at which it is mechanically coupleable with the second fixing elements 7.

Advantageously, the fourth mechanical connection points 56 are positioned at each fifth coupling surface 51 of each support element 5.

Preferably, the second fixing elements 7 are solidly connected with the second clamping element 4 at the third mechanical connection points 47 and are mechanically coupleable with each support element 5 at the fourth mechanical connection points 56.

However, other solutions are possible. For example, in some embodiments of the invention the second fixing elements 7 may be removable with respect to both the second clamping element 4 and each support element 5 or solidly connected with the support element 5 and removable with respect to the second clamping element 4.

The accessory device 1 comprises third fixing elements 8 to fix the main unit 21 of the electronic device 2 to each support element 5.

Each support element 5 comprises fifth mechanical connection points 57 for mechanical coupling with the main unit 21 of the electronic device 2.

Advantageously, the fifth mechanical connection points 57 are positioned at each sixth coupling surface 52 of each support element 5.

Preferably, the third fixing elements 8 are removable with respect to the support element 5 and the main unit 21 of the electronic device 2.

However, other solutions are possible. For example, in some embodiments of the invention, the third fixing elements 8 may be solidly connected with the main unit 21 of the electronic device 2.

In a preferred embodiment of the invention, the third mechanical connection points 47 of the second clamping element 4 and the fourth mechanical connection points 56 of each support element 5 are arranged so that each support element 5 is mechanically coupleable with the second clamping element 4 at a plurality of first coupling positions A1, A2, A3.

Preferably, the second clamping element 4 comprises one or more pairs of third mechanical connection points 47, which are spaced of a first distance D₁ and coupleable with one or more corresponding pairs of fourth mechanical connection points 56 of the support element 5, spaced of a same distance D₁.

In a preferred embodiment of the invention, the fifth mechanical connection points 57 of each support element 5 are arranged so that the main unit 21 of the electronic device 2 is mechanically coupleable with the support element 5 at a plurality of second coupling positions B1, B2, B3, B4, B5, B6.

Preferably, each supporting element 5 comprises one or more pairs of fifth mechanical connection points 57, which are spaced of a second distance D₂ and coupleable with one or more corresponding pairs of mechanical connection points 210 of the main unit 21, spaced of a same distance D₂.

The first clamping element 3 comprises a first clamping plate having opposite first and second coupling surfaces 31,32.

The first clamping plate 3 is mechanically coupleable with the external surface 510 of the cabinet door 500 at the first coupling surface 31.

Preferably, when the electronic device 2 comprises an external unit 22, the first clamping plate 3 is mechanically coupleable with the external unit 22 at the second coupling surface 32.

The first clamping plate 3 comprises the first mechanical connection points 36, at which it is mechanically coupleable with the first fixing elements 6.

At the first mechanical connection points 36, the first clamping plate 3 comprises first connection holes 34 (preferably circular or slot-shaped) for the passage of the first fixing elements 6. In this way, the fixing elements 6 can pass through the thickness of the first clamping plate 3.

Preferably, when the electronic device 2 comprises an external unit 22, the first connection holes 34 are overlapped with the port 530 of the cabinet door 500, when the first clamping plate 3 is coupled with the cabinet door 500.

In this way, the fixing elements 6 can pass through the first connection holes 36 and the port 530, thereby passing through the thickness of the first clamping plate 3 and of the cabinet door 500.

According to a possible alternative variant (not shown), the first connection holes 34 can be aligned with corresponding connection holes of the cabinet door 500, when the first clamping plate 3 is coupled with the cabinet door 500.

Preferably, when the electronic device 2 comprises an external unit 22, the first clamping plate 3 comprises a first aperture 33 to allow the passage of wires for electrically connecting the main unit 21 and the external unit 22 of the electronic device 2.

Preferably, when the first clamping plate 3 is coupled with the cabinet door 500, the first aperture 33 is at least partially overlapped with the port 530 of the cabinet door 500 to allow the access to one or more electrical connection points 220 of the external unit 22, at which the external unit 22 may comprise one or more power supply and/or communication ports (for example a RJ45 socket, as shown in the cited figures, or a USB socket or the like).

The second clamping element 4 comprises a second clamping plate having opposite third and fourth coupling surfaces 41, 42.

Preferably, the second clamping plate 4 is mechanically coupleable with the internal surface 510 of the cabinet door 500 at the third coupling surface 41.

The second clamping plate 4 comprises the second mechanical connection points 46, at which it is mechanically coupleable with the first fixing elements 6.

At the second mechanical connection points 46, the second clamping plate 4 comprises second connection holes 44 (preferably circular or slot-shaped) for the passage of the first fixing elements 6. In this way, the fixing elements 6 can pass through the thickness of the second clamping plate 4.

Preferably, when the electronic device 2 comprises an external unit 22, the second connection holes 44 are overlapped with the port 530 of the cabinet door 500, when the second clamping plate 4 is coupled with the cabinet door 500.

In this way, the fixing elements 6 can pass through the port 530 and the second connection holes 44, thereby passing through the thickness of the cabinet door 500 and of the second clamping plate 4.

According to a possible alternative variant (not shown), the second connection holes 44 can be aligned with corresponding connection holes of the cabinet door 500, when the second clamping plate 4 is coupled with the cabinet door 500.

Preferably, when the electronic device 2 comprises an external unit 22, the second clamping plate 4 comprises a second aperture 43 to allow the passage of wires for electrically connecting the main unit 21 and the external unit 22 of the electronic device 2.

Preferably, when the second clamping plate 4 is coupled with the cabinet door 500, the second aperture 43 is at least partially overlapped with the port 530 of the cabinet door 500.

Preferably, the second clamping plate 4 comprises a plurality of third mechanical connection points 47, which are arranged so that the support element 5 is mechanically coupleable with the second clamping element 4 at a plurality of first coupling positions A1, A2, A3.

Preferably, the second clamping plate 4 comprises one or more pairs of third mechanical connection points 47, which are spaced of the first distance D₁ and which are coupleable with one or more corresponding pairs of fourth mechanical connection points 54 of the support element 5.

In a preferred embodiment of the invention, shown in the cited figures, the first fixing elements 6 comprise first bolts.

Preferably, the first bolts 6 pass through the first and second holes 34, 44 of the first and second plates 3, 4, when such coupling plates are coupled with the cabinet door 500.

Preferably, when the cabinet door 500 comprises a port 530, the first bolts 6 pass through the first and second apertures 33, 43 of the first and second plates 3, 4 and said port 530, when the plates 3, 4 are coupled with the cabinet door 500.

Preferably, when the electronic device 2 comprises an external unit 22, the first bolts 6 have screws solidly connected with the external unit 22 at the mechanical connection points 221 of this latter. In this way, the first bolts 6 protrude from the coupling surface 225 of the external unit 22.

Preferably, when the external unit 22 is coupled with the cabinet door 500, the screw of each first bolt 6 passes through a corresponding first hole 34, the port 530 of the cabinet door and a corresponding second hole 44 and it couples with a corresponding nut at the second plate 4.

In a preferred embodiment of the invention, shown in the cited figures, each support element 5 comprises a support bracket having one or more fifth coupling surfaces 51, at which it is mechanically coupleable with the second clamping element 4, and one or more sixth coupling surfaces 52, at which it is mechanically coupleable with the main unit 21 of the electronic device 2.

Each support bracket 5 comprises the fourth mechanical connection points 56, at which it is mechanically coupleable with the second fixing elements 7.

Each support bracket 5 comprises third connection holes 53 (preferably circular or slot-shaped) at the fourth mechanical connection points 56 for the passage of the second fixing elements 7. In this way, the fixing elements 7 can pass through the thickness of the support bracket 5.

Preferably, each support bracket 5 comprises a plurality of fifth coupling surfaces 51 including a plurality of fourth mechanical connection points 56, which are arranged so that the support bracket 5 is mechanically coupleable with the second clamping element 4 at a plurality of first coupling positions A1, A2, A3.

Preferably, the support bracket 5 comprises one or more pairs of fourth mechanical connection points 56, which are spaced of the first distance D₁ and coupleable with one or more corresponding pairs of third mechanical connection points 47 of the second clamping plate 4, spaced of a same distance D₁.

Each support bracket 5 comprises the fifth mechanical connection points 57, at which it is mechanically coupleable with the third fixing elements 8.

Each support bracket 5 comprises fourth connection holes 54 at the fifth mechanical connection points 57 for the passage of the third fixing elements 8. In this way, the fixing elements 8 can pass through the thickness of the support bracket 5.

Preferably, each support bracket 5 comprises a plurality of sixth coupling surfaces 52 including a plurality of fifth mechanical connection points 57, which are arranged so that the main unit 21 of the electronic device 2 is mechanically coupleable with the support bracket 5 at a plurality of second coupling positions B1, B2, B3, B4, B5, B6.

Preferably, each support bracket 5 comprises one or more pairs of fifth mechanical connection points 57, which are spaced of the second distance D₂ and coupleable with one or more corresponding pairs of mechanical connection points 210 of the main unit 21, spaced of a same distance D₂.

In a preferred embodiment of the invention, shown in the cited figures, the second fixing elements 7 comprise second bolts.

Preferably, the second bolts 7 are adapted to pass through the third connection holes 53 of the support bracket.

Preferably, the second bolts 7 have screws solidly connected with the second clamping plate 4 at the third mechanical connection points 47 so as to protrude from the fourth coupling surface 42.

Preferably, when the support bracket 5 is coupled with the clamping plate 4, the screw of each second bolt 7 passes through a corresponding third hole 53 and it couples with a corresponding nut at the support bracket 5.

In a preferred embodiment of the invention, shown in the cited figures, the third fixing elements 8 comprise third bolts.

Preferably, the third bolts 8 are adapted to pass through the fourth connection holes 54 of the support bracket 5 and corresponding connection holes 210A of the main unit 21 at the mechanical connection points 210 of this latter.

Preferably, when the main unit 21 is coupled with the support bracket 5, the screw of each third bolt 8 has a head coupled with the support bracket 5, passes through a corresponding fourth hole 54 of the support bracket 5 and coupled with a corresponding nut at the main unit 21.

However, the third bolts 8 may be oriented in an opposite way with respect to the one described above.

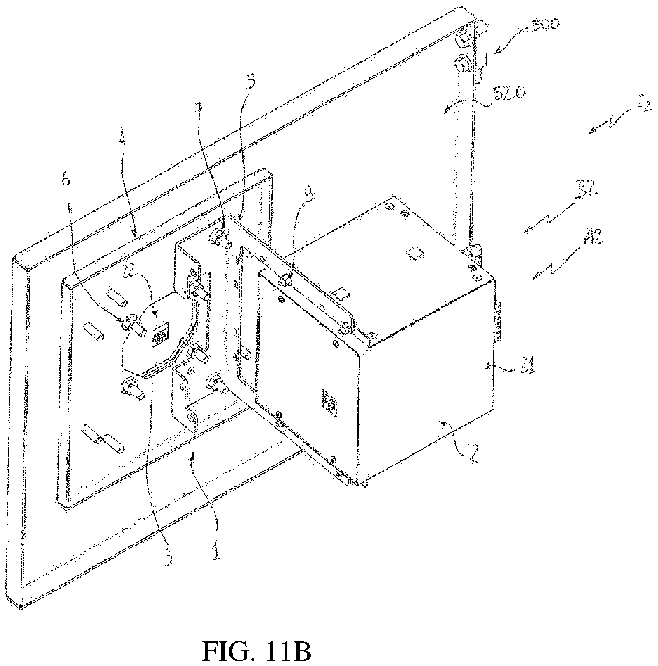

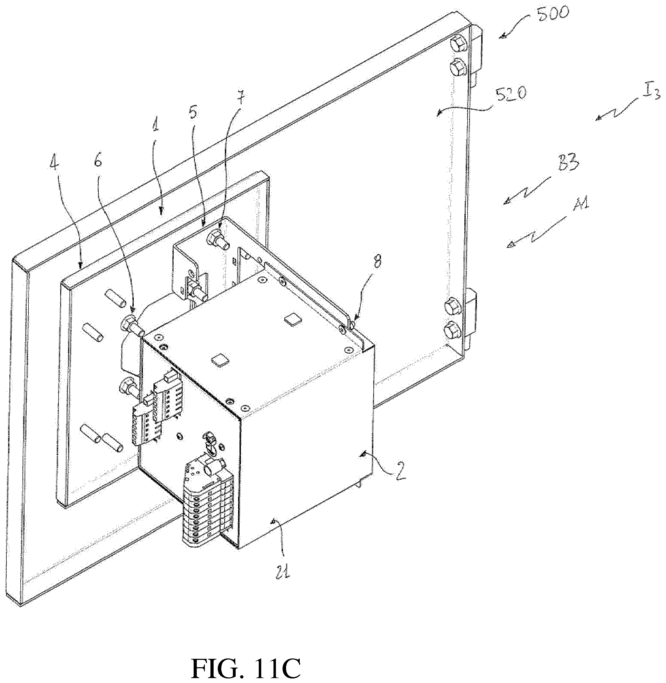

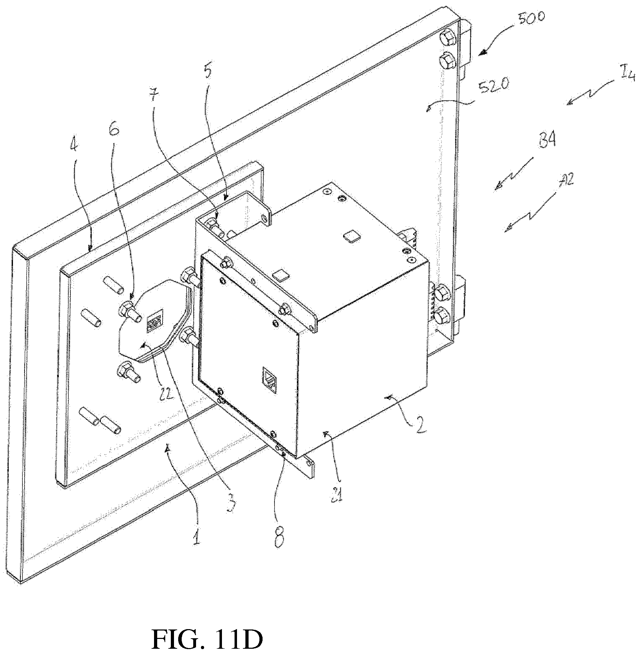

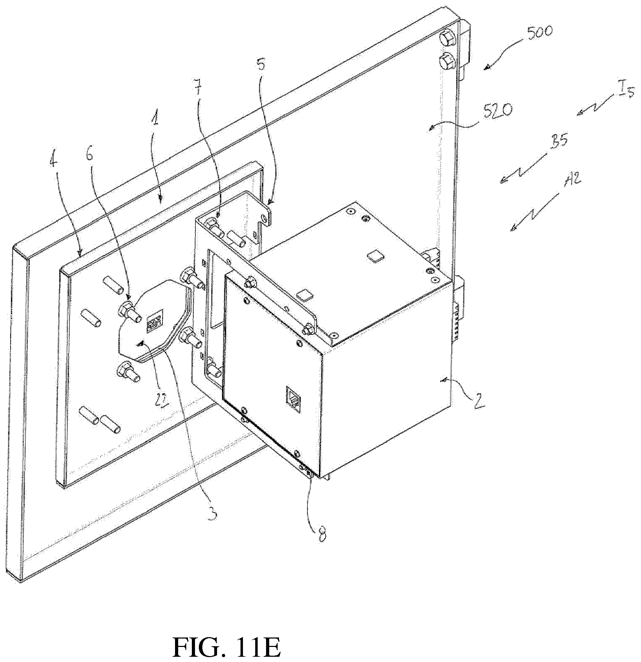

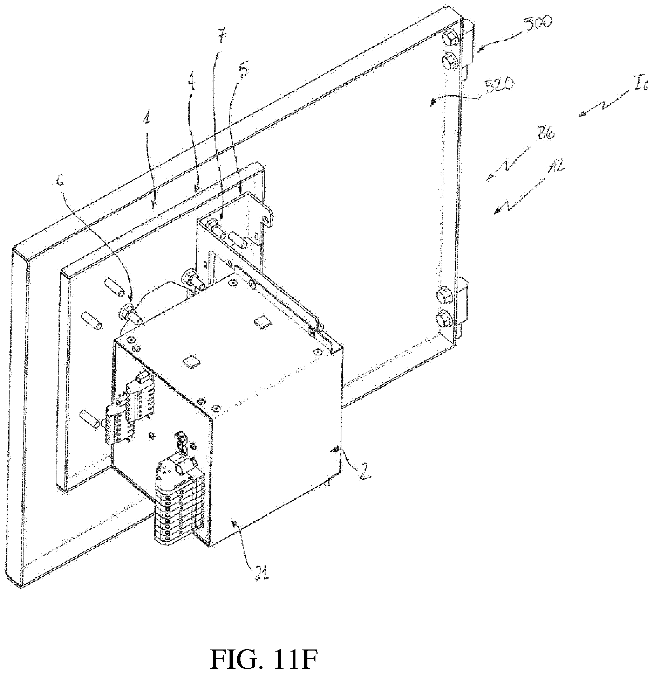

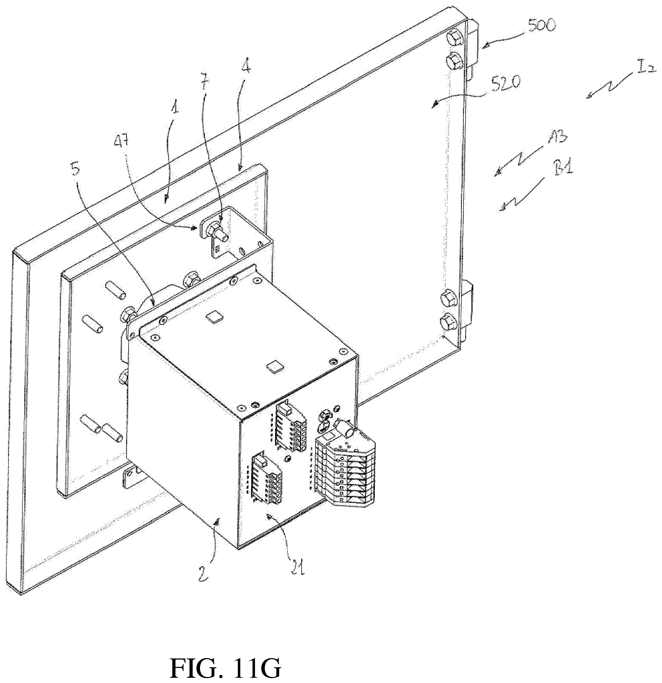

Referring to figure 11, an embodiment of the support bracket 5 is shown.

The support bracket 5 comprises a first portion 5A, which comprises first spaced L-shaped flat legs including a plurality of fifth coupling surfaces 51 arranged at different sides 50A, 50B of said first legs.

The legs of the second portion 5A extend parallel one to another and comprise sides 50A, 50B extending along perpendicular planes.

The support bracket 5 further comprises a second portion 5B, which comprises second spaced rectilinear flat legs including a plurality of sixth coupling surfaces 52 at opposite sides 50C, 50D of said second legs.

The legs of the second portion 5B extend parallel one to another along a same half-plane.

The portions 5A, 5B of the support bracket 5 are arranged perpendicularly one to another.

Referring to figures 11A-11G, it is evident that the support bracket 5 is mechanically coupleable with the second clamping plate 4 at a plurality of first coupling positions A1, A2, A3.

It is also apparent that the main unit 21 of the electronic device 2 is mechanically coupleable with the support bracket 5 at a plurality of second coupling positions B1, B2, B3, B4, B5, B6.

The particular shape of the support bracket 5 allows arranging the main unit 21 according to a plurality of different installation positions I1-I7 with respect to the cabinet door 500.

For example, figures 11A-11F show how the main unit 21 can be easily positioned in seven different installation positions I1-I7 with respect to the cabinet door 500 for each pair of third mechanical connection points 47 of the second clamping plate 4.

As the second plate 4 is provided (in the embodiment shown in the cited figures) with four pairs of third mechanical connection points 47 (i.e. four pairs of mechanical connection points 47 positioned at the first distance D₁), it is evident that the main unit 21 can be easily positioned in twenty eighth different installation positions with respect to the cabinet door 500 by suitably coupling the support bracket 5 with the second clamping plate 4.

Thanks to the particular shape of the legs of the first portion 5A, the relative distance between the main unit 21 and the cabinet door 500 may be varied by properly selecting the fifth coupling surfaces 51 for coupling the support bracket 5 with the second clamping plate 4 (see figures 11A, 11F).

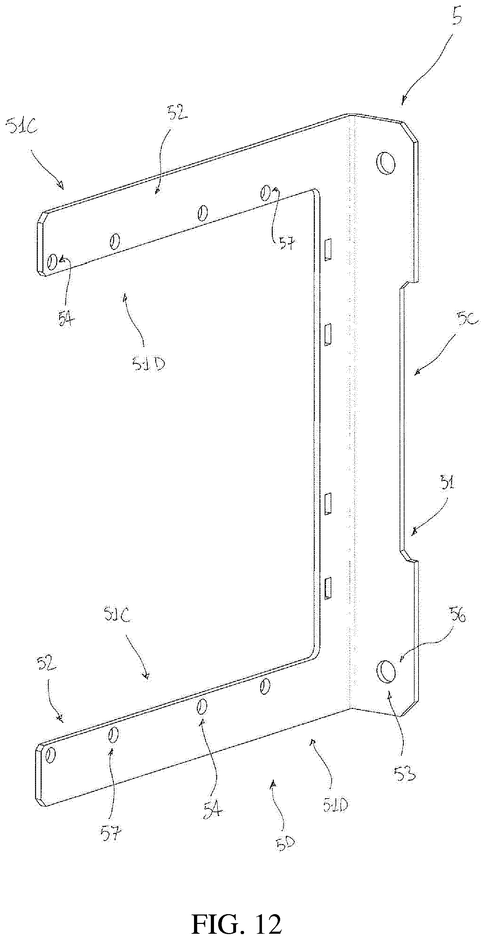

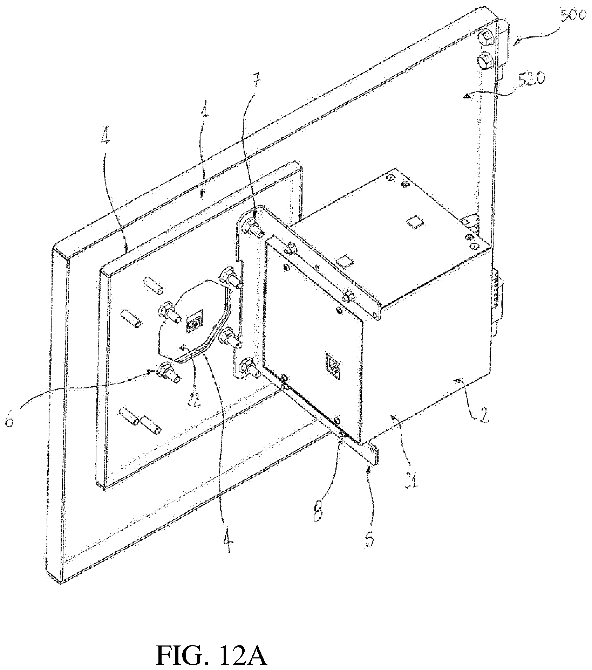

Referring to figure 12, a further variant embodiment of the support bracket 5 is shown.

The support bracket 5 comprises a third portion 5C, which is substantially rectilinear and includes a fifth coupling surface 51 at one side.

The support bracket 5 further comprises a fourth portion 5D, which comprises third spaced parallel legs including a plurality of sixth coupling surfaces 52 at opposite sides 51C, 51D of said third legs.

Preferably, the portions 5C, 5D of the support bracket 5 are flat and extend along planes that are perpendicular one to another.

Also in this case, the support bracket 5 is mechanically coupleable with the second clamping plate 4 at a plurality of first coupling positions and that the main unit 21 of the electronic device 2 is mechanically coupleable with the support bracket 5 at a plurality of second coupling positions.

Figure 12A shows an exemplary installation position of the main unit 21 with respect to the cabinet door 500. Further installation positions can be obtained by suitably coupling the support bracket 5 with the second clamping plate 4.

Referring to figure 13, a further variant embodiment of the support bracket 5 is shown.

The support bracket 5 comprises a flat central portion 5E, which is includes a sixth coupling surface 52 at one side of said central portion 5E, and two lateral portions 5F, which are formed by L-shaped wings extending perpendicularly at one side of said central portion 5E.

The lateral portions 5F include fifth coupling surfaces 51 at one side of said L-shaped wings.

Also in this case, the support bracket 5 is mechanically coupleable with the second clamping plate 4 at a plurality of first coupling positions and that the main unit 21 of the electronic device 2 is mechanically coupleable with the support bracket 5 at a plurality of second coupling positions.

In order to facilitate the coupling with the second clamping plate 4, the holes 53 at the fourth mechanical connection points 56 of the support bracket 5 are shaped as open slots.

Preferably, when the variant embodiment of figure 13 is adopted, two support brackets 5 are advantageously coupled with the second clamping plate 4 to fix the main unit 21 with the cabinet door 500.

Figure 13A shows an exemplary installation position of the main unit 21 with respect to the cabinet door 500. Further installation positions can be obtained by suitably coupling the support brackets 5 with the second clamping plate 4.

The support bracket 5 may be differently configured with respect to the exemplary embodiments illustrated above, according to the needs.

The accessory kit 1 provides remarkable advantages in installing an electronic device on the cabinet door of a LV or MV switchgear.

The accessory kit 1 has a modular structure, which allows easily adapting to the structure of the cabinet door 500 according to the available installation room and the orientation of the cabinet door 500.

The accessory kit 1 ensures a high level of installation flexibility, which allows avoiding or remarkably reducing interventions on the structure of the cabinet door 500.

The accessory kit 1 is therefore particularly adapted to suitably install electronic devices of different types on cabinet doors having different size and structures.

In particular, the accessory kit 1 remarkably facilitates the retrofitting interventions of electronic devices provided with an external HMI .

The accessory kit 1 may be subject to possible variants within the capacity of the skilled person and the invention as defined by the claims.

For example, the shape of the coupling plates 3, 4 and of the support bracket 5 may different to the ones shown in the cited figures.

As a further example, the fixing elements 6, 7, 8 may be of different kind with respect to those shown in the cited figures.

The accessory kit 1 has proven to be of relatively easy and cheap realization at industrial level and practical installation on the field.

## Claims

1. Accessory kit (1) for retrofitting of a LV or MV switchgear with an electronic device (2) comprising:
- first and second clamping elements (3, 4) mechanically coupleable with a cabinet door (500) of said switchgear at an external surface (510) and an internal surface (520) of said cabinet door (500), respectively;
- at least a support element (5) mechanically coupleable with said second clamping element (4) and with a main unit (21) of said electronic device;
- first fixing elements (6) to fix said first and second clamping elements (3, 4) with said cabinet door (50), said first and second clamping elements comprising first and second mechanical connection points (36, 46) for mechanical coupling with said first fixing elements, respectively;
- second fixing elements (7) to fix said support element (5) with said second clamping element (4), said second clamping element comprising third mechanical connection points (47) for mechanical coupling with said second fixing elements, said support element comprising fourth mechanical connection points (56) for mechanical coupling with said second fixing elements;
- third fixing elements (8) to fix the main unit (21) of said electronic device with said support element (5), said support element comprising fifth mechanical connection points (57) for mechanical coupling with said third fixing elements;
**characterised in that**:
- said first clamping element comprises a first clamping plate (3) having opposite first and second coupling surfaces (31, 32), said first clamping plate being mechanically coupleable with the external surface (510) of said cabinet door (500) at said first coupling surface (31), said first clamping plate (3) comprising first connection holes (34) for the passage of said first fixing elements (6) through said first clamping plate at said first mechanical connection points (36);
- said second clamping element comprises a second clamping plate (4) having opposite third and fourth coupling surfaces (41, 42), said second clamping plate being mechanically coupleable with the internal surface (520) of said cabinet door (500) at said third coupling surface (41), said second clamping plate (4) comprising second connection holes (44) for the passage of said first fixing elements (6) through said second clamping plate at said second mechanical connection points (46);
- said at least a support element comprises at least a support bracket (5) comprising one or more fifth coupling surfaces (51), at which said support bracket is mechanically coupleable with said second clamping element (4), and one or more sixth coupling surfaces (52), at which said support bracket is mechanically coupleable with the main unit (21) of said electronic device, said at least a support bracket (5) comprising third connection holes (53) for the passage of said second fixing elements (7) through said support bracket at said fourth mechanical connection points (56) and fourth connection holes (54) for the passage of said third fixing elements (8) through said support bracket at said fifth mechanical connection points (57).

2. Accessory kit, according to claim 1, **characterised in that** said electronic device comprises an external unit (22), which is separated from and electrically connectable with the main unit (21) of said electronic device, said first clamping element (3) being mechanically coupleable with said external unit to fix said external unit with said cabinet door (500) at the external surface (510) of said cabinet door.

3. Accessory kit, according to claim 2, **characterised in that** said first fixing elements (6) are adapted to fix said external unit (22) with said first clamping element (3).

4. Accessory kit, according to one or more of the previous claims, **characterised in that** the third mechanical connection points (47) of said second clamping element (4) and the fourth mechanical connection points (56) of said support element (5) are arranged so that said support element is mechanically coupleable with said second clamping element (4) at a plurality of first coupling positions (A1, A2, A3).

5. Accessory kit, according to one or more of the previous claims, **characterised in that** the fifth mechanical connection points (57) of said support element (5) are arranged so that the main unit (21) of said electronic device is mechanically coupleable with said support element at a plurality of second coupling positions (B1, B2, B3, B4, B5, B6).

6. Accessory kit, according to claim 2, **characterised in that** said first clamping plate (3) comprises a first aperture (33) to allow the passage of wires for electrically connecting the main unit (21) and the external unit (22) of said electronic device.

7. Accessory kit, according to claim 2, **characterised in that** said second clamping plate (4) comprises a second aperture (43) to allow the passage of wires for electrically connecting the main unit (21) and the external unit (21) of said electronic device (2).

8. A LV or MV switchgear **characterised in that** it comprises an accessory kit (1) according to one or more of the previous claims.

9. A LV or MV switchgear **characterised in that** it comprises an electronic device (2) installed by means of an accessory kit (1) according to one or more of the claims from 1 to 7.

## Patentansprüche

1. Zubehörkit (1) zur Nachrüstung einer Niederspannungs- oder Mittelspannungs-Schaltanlage mit einer elektronischen Vorrichtung (2), umfassend:
- erste und zweite Klemmelemente (3, 4), die mechanisch mit einer Gehäusetür (500) der Schaltanlage an einer Außenfläche (510) beziehungsweise einer Innenfläche (520) der Gehäusetür (500) koppelbar sind;
- mindestens ein Trägerelement (5), das mechanisch mit dem zweiten Klemmelement (4) und mit einer Haupteinheit (21) der elektronischen Vorrichtung koppelbar ist;
- erste Befestigungselemente (6) zum Befestigen der ersten und zweiten Klemmelemente (3, 4) mit der Gehäusetür (50), wobei die ersten und zweiten Klemmelemente erste und zweite mechanische Verbindungspunkte (36, 46) zum mechanischen Koppeln mit den ersten Befestigungselementen umfassen;
- zweite Befestigungselemente (7) zum Befestigen des Trägerelements (5) mit dem zweiten Klemmelement (4), wobei das zweite Klemmelement dritte mechanische Verbindungspunkte (47) zum mechanischen Koppeln mit den zweiten Befestigungselementen umfasst, wobei das Trägerelement vierte mechanische Verbindungspunkte (56) zum mechanischen Koppeln mit den zweiten Befestigungselementen umfasst;
- dritte Befestigungselemente (8) zum Befestigen der Haupteinheit (21) der elektronischen Vorrichtung mit dem Trägerelement (5), wobei das Trägerelement fünfte mechanische Verbindungspunkte (57) zum mechanischen Koppeln mit den dritten Befestigungselementen umfasst;
**dadurch gekennzeichnet, dass**:
- das erste Klemmelement eine erste Klemmplatte (3) mit gegenüberliegenden ersten und zweiten Kopplungsflächen (31, 32) umfasst, wobei die erste Klemmplatte mechanisch mit der Außenfläche (510) der Gehäusetür (500) an der ersten Kopplungsfläche (31) koppelbar ist, wobei die erste Klemmplatte (3) erste Verbindungslöcher (34) für den Durchgang der ersten Befestigungselemente (6) durch die erste Klemmplatte an den ersten mechanischen Verbindungspunkten (36) umfasst;
- das zweite Klemmelement eine zweite Klemmplatte (4) mit gegenüberliegenden dritten und vierten Kopplungsflächen (41, 42) umfasst, wobei die zweite Klemmplatte mechanisch mit der Innenfläche (520) der Gehäusetür (500) an der dritten Kopplungsfläche (41) koppelbar ist, wobei die zweite Klemmplatte (4) zweite Verbindungslöcher (44) für den Durchgang der ersten Befestigungselemente (6) durch die zweite Klemmplatte an den zweiten mechanischen Verbindungspunkten (46) umfasst;
- das mindestens eine Trägerelement mindestens eine Trägerhalterung (5) umfasst, die eine oder mehrere fünfte Kopplungsflächen (51), an denen die Trägerhalterung mechanisch mit dem zweiten Klemmelement (4) koppelbar ist, und eine oder mehrere sechste Kopplungsflächen (52), an denen die Trägerhalterung mechanisch mit der Haupteinheit (21) der elektronischen Vorrichtung koppelbar ist, umfasst, wobei die mindestens eine Trägerhalterung (5) dritte Verbindungslöcher (53) für den Durchgang der zweiten Befestigungselemente (7) durch die Trägerhalterung an den vierten mechanischen Verbindungspunkten (56) und vierte Verbindungslöcher (54) für den Durchgang der dritten Befestigungselemente (8) durch die Trägerhalterung an den fünften mechanischen Verbindungspunkten (57) aufweist.

2. Zubehörkit nach Anspruch 1, **dadurch gekennzeichnet, dass** die elektronische Vorrichtung eine externe Einheit (22) umfasst, die von der Haupteinheit (21) der elektronischen Vorrichtung getrennt und elektrisch mit dieser verbindbar ist, wobei das erste Klemmelement (3) mechanisch mit der externen Einheit koppelbar ist, um die externe Einheit mit der Gehäusetür (500) an der Außenfläche (510) der Gehäusetür zu befestigen.

3. Zubehörkit nach Anspruch 2, **dadurch gekennzeichnet, dass** die ersten Befestigungselemente (6) geeignet sind, die externe Einheit (22) mit dem ersten Klemmelement (3) zu befestigen.

4. Zubehörkit nach einem oder mehreren der vorstehenden Ansprüche, **dadurch gekennzeichnet, dass** die dritten mechanischen Verbindungspunkte (47) des zweiten Klemmelements (4) und die vierten mechanischen Verbindungspunkte (56) des Trägerelements (5) so angeordnet sind, dass das Trägerelement mit dem zweiten Klemmelement (4) an einer Vielzahl von ersten Kupplungspositionen (A1, A2, A3) mechanisch koppelbar ist.

5. Zubehörkit nach einem oder mehreren der vorstehenden Ansprüche, **dadurch gekennzeichnet, dass** die fünften mechanischen Verbindungspunkte (57) des Trägerelements (5) so angeordnet sind, dass die Haupteinheit (21) der elektronischen Vorrichtung an einer Vielzahl von zweiten Kupplungspositionen (B1, B2, B3, B4, B5, B6) mechanisch mit dem Trägerelement koppelbar ist.

6. Zubehörkit nach Anspruch 2, **dadurch gekennzeichnet, dass** die erste Klemmplatte (3) eine erste Öffnung (33) umfasst, um den Durchgang von Kabeln zum elektrischen Verbinden der Haupteinheit (21) und der externen Einheit (22) der elektronischen Vorrichtung zu ermöglichen.

7. Zubehörkit nach Anspruch 2, **dadurch gekennzeichnet, dass** die zweite Klemmplatte (4) eine zweite Öffnung (43) umfasst, um den Durchgang von Kabeln zum elektrischen Verbinden der Haupteinheit (21) und der externen Einheit (21) der elektronischen Vorrichtung (2) zu ermöglichen.

8. Niederspannungs- oder Mittelspannungs-Schaltanlage, **dadurch gekennzeichnet, dass** sie ein Zubehörkit (1) nach einem oder mehreren der vorstehenden Ansprüche umfasst.

9. Niederspannungs- oder Mittelspannungs-Schaltanlage, **dadurch gekennzeichnet, dass** sie eine elektronische Vorrichtung (2) umfasst, die mittels eines Zubehörkits (1) nach einem oder mehreren der Ansprüche 1 bis 7 installiert ist.

## Revendications

1. Kit d'accessoires (1) pour rétrofittage d'un appareillage de commutation LV ou MV avec un dispositif électronique (2) comprenant :
- de premier et second éléments de serrage (3, 4) couplables mécaniquement à une porte d'armoire (500) dudit appareillage de commutation à une surface externe (510) et une surface interne (520) de ladite porte d'armoire (500), respectivement ;
- au moins un élément de support (5) couplable mécaniquement audit second élément de serrage (4) et à une unité principale (21) dudit dispositif électronique ;
- de premiers éléments de fixation (6) pour fixer lesdits premier et second éléments de serrage (3, 4) avec ladite porte d'armoire (50), lesdits premier et second éléments de serrage comprenant de premier et second points de connexion mécanique (36, 46) pour couplage mécanique auxdits premiers éléments de fixation, respectivement ;
- de seconds éléments de fixation (7) pour fixer ledit élément de support (5) avec ledit second élément de serrage (4), ledit second élément de serrage comprenant de troisièmes points de connexion mécanique (47) pour couplage mécanique auxdits seconds éléments de fixation, ledit élément de support comprenant de quatrièmes points de connexion mécanique (56) pour couplage mécanique auxdits seconds éléments de fixation ;
- de troisièmes éléments de fixation (8) pour fixer l'unité principale (21) dudit dispositif électronique avec ledit élément de support (5), ledit élément de support comprenant de cinquièmes points de connexion mécanique (57) pour couplage mécanique auxdits troisièmes éléments de fixation ;
**caractérisé en ce que** :
- ledit premier élément de serrage comprend une première plaque de serrage (3) ayant de première et seconde surfaces de couplage (31, 32) opposées, ladite première plaque de serrage étant couplable mécaniquement à la surface externe (510) de ladite porte d'armoire (500) à ladite première surface de couplage (31), ladite première plaque de serrage (3) comprenant de premiers trous de connexion (34) pour le passage desdits premiers éléments de fixation (6) à travers ladite première plaque de serrage auxdits premiers points de connexion mécanique (36) ;
- ledit second élément de serrage comprend une seconde plaque de serrage (4) ayant de troisième et quatrième surfaces de couplage (41, 42), ladite seconde plaque de serrage étant couplable mécaniquement à la surface interne (520) de ladite porte d'armoire (500) à ladite troisième surface de couplage (41), ladite seconde plaque de serrage (4) comprenant de seconds trous de connexion (44) pour le passage desdits premiers éléments de fixation (6) à travers ladite seconde plaque de serrage auxdits seconds points de connexion mécanique (46) ;
- ledit au moins un élément de support comprend au moins une ferrure de support (5) comprenant une ou plusieurs cinquièmes surfaces de couplage (51), auxquelles ladite ferrure de support est mécaniquement couplable audit second élément de serrage (4), et une ou plusieurs sixièmes surfaces de couplage (52), auxquelles ladite ferrure de support est mécaniquement couplable à l'unité principale (21) dudit dispositif électronique, ladite au moins une ferrure de support (5) comprend de troisièmes trous de connexion (53) pour le passage desdits seconds éléments de fixation (7) à travers ladite ferrure de support auxdits quatrièmes points de connexion mécanique (56) et de quatrièmes trous de connexion (54) pour le passage desdits troisièmes éléments de fixation (8) à travers ladite ferrure de support auxdits cinquièmes points de connexion mécanique (57).

2. Kit d'accessoires, selon la revendication 1, **caractérisé en ce que** ledit dispositif électronique comprend une unité externe (22), qui est séparée de et connectable électriquement à l'unité principale (21) dudit dispositif électronique, ledit premier élément de serrage (3) étant couplable mécaniquement à ladite unité externe pour fixer ladite unité externe à ladite porte d'armoire (500) à la surface externe (510) de ladite porte d'armoire.

3. Kit d'accessoires, selon la revendication 2, **caractérisé en ce que** lesdits premiers éléments de fixation (6) sont adaptés pour fixer ladite unité externe (22) avec ledit premier élément de serrage (3).

4. Kit d'accessoires, selon une ou plusieurs des revendications précédentes, **caractérisé en ce que** les troisièmes points de connexion mécanique (47) dudit second élément de serrage (4) et les quatrièmes points de connexion mécanique (56) dudit élément de support (5) sont agencés de sorte que ledit élément de support est mécaniquement couplable audit second élément de serrage (4) à une pluralité de premières positions de couplage (A1, A2, A3).

5. Kit d'accessoires, selon une ou plusieurs des revendications précédentes, **caractérisé en ce que** les cinquièmes points de connexion mécanique (57) dudit élément de support (5) sont agencés de sorte que l'unité principale (21) dudit dispositif électronique est mécaniquement couplable audit élément de support à une pluralité de secondes positions de couplage (B1, B2, B3, B4, B5, B6).

6. Kit d'accessoires, selon la revendication 2, **caractérisé en ce que** ladite première plaque de serrage (3) comprend une première ouverture (33) pour permettre le passage de câbles pour connecter électriquement l'unité principale (21) et l'unité externe (22) dudit dispositif électronique.

7. Kit d'accessoires, selon la revendication 2, **caractérisé en ce que** ladite seconde plaque de serrage (4) comprend une seconde ouverture (43) pour permettre le passage de câbles pour connecter électriquement l'unité principale (21) et l'unité externe (21) dudit dispositif électronique (2).

8. Appareillage de commutation LV ou MV **caractérisé en ce qu'**il comprend un kit d'accessoires (1) selon une ou plusieurs des revendications précédentes.

9. Appareillage de commutation LV ou MV **caractérisé en ce qu'**il comprend un dispositif électronique (2) installé au moyen d'un kit d'accessoires (1) selon une ou plusieurs des revendications 1 à 7.
